# EUROPÄISCHE PATENTSCHRIFT

(11) **EP 2 843 998 B1**
(45) Veröffentlichungstag und Bekanntmachung des Hinweises auf die Patenterteilung: **15.04.2020**
(21) Anmeldenummer: 13182325.4
(22) Anmeldetag: 30.08.2013
(51) Int. Cl.: H04W 36/00, H04W 84/00

(54) **Verfahren für ein zelluläres Kommunikationssystem und Kommunikationssystem mit virtueller Basisstation**
Method for a cellular communication system and communication system with virtual base station
Procédé pour un système de communication cellulaire et système de communication doté d'une station de base virtuelle

(43) Veröffentlichungstag der Anmeldung: 04.03.2015
(73) Patentinhaber: Swisscom AG, 3050 Bern (CH)
(72) Erfinder: Wenger, Daniel, 3628 Uttigen (CH)
(74) Vertreter: P&TS SA (AG, Ltd.)

(56) Entgegenhaltungen:
- US-A1- 2006 264 212
- US-A1- 2009 141 685
- US-A1- 2013 086 665
- Aruba Networks: "ArubaOS 6.1", , 7. August 2013 (2013-08-07), Seite 1-2, 45-58, 111-170, 295-324, XP055103091, Gefunden im Internet: URL:http://support.arubanetworks.com/Docum entation/tabid/77/DMXModule/512/Command/Co re_Download/Default.aspx?EntryId=5926 via http://support.arubanetworks.com/Documenta tion/tabid/77/DMXModule/512/EntryId/5585/D efault.aspx : ArubaOS_6.1UG.pdf [gefunden am 2014-02-19]

## Beschreibung

### Technisches Gebiet

Die Erfindung bezieht sich auf ein Verfahren für ein zelluläres Kommunikationssystem und ein Kommunikationssystem.

### Stand der Technik

Die Verbindungsqualität im modernen Mobilfunk hat sich in den letzten Jahren stark verbessert. Allerdings gibt es immer noch Situationen, in denen der Verbindungsaufbau, die Aufrechterhaltung der Verbindung und die Qualität Schwierigkeiten bereiten. Dies ist zum Beispiel in Zügen, die eine grosse Anzahl von Mobilfunkgeräten mit sich führen, der Fall. Aufgrund der Geschwindigkeit muss jedes Mobilfunkgerät im Zug ständig eine Verbindungsübergabe zu der nächsten Basisstation organisieren. Dies ist nicht nur eine starke Belastung für das Mobilfunkgerät und die bestehende Verbindung. Dies belastet auch das Mobilfunknetz jedes Mal sehr stark, wenn der Zug in das Gebiet einer neuen Basisstation kommt. In einer solchen Situation frägt eine grosse Anzahl von Mobilfunkgeräten ungefähr gleichzeitig eine Verbindungsübergabe bei der gleichen Basisstation an. Die Basisstation muss somit für Belastungen ausgelegt werden, die weit über der Durchschnittsbelastung liegen. Ausserdem gibt es in modernen Mobilfunkgeräten viele Anwendungen, die nicht stabil gegenüber einer Verbindungsübergabe zu der nächsten Basisstation sind.

US2008/043655 schlagen für WLAN Verbindungen im Zug vor, in dem Zug eine WLAN-Basisstation zu installieren und entlang der Zugstrecke Verbindungspunkte zu installieren, mit denen die WLAN Basisstation die Signale der mit ihr verbundenen Geräte austauscht. Somit müssen die verbundenen Geräte keine Verbindungsübergabe organisieren, da sie immer die gleiche Basisstation sehen.

WO00/36858 offenbart eine ähnliche Lösung für den Mobilfunk. In jedem Zug wird eine Basisstation installiert, mit der sich alle Mobilfunkgeräte in dem Zug verbinden können, so dass die Mobilfunkgeräte immer eine gute Verbindung zu der Basisstation haben. Die Basisstation kontaktiert nacheinander feste Basisstationen ausserhalb des Zuges entlang der Zugstrecke, so dass nur eine Verbindungsübergabe von der mobilen Basisstation organisiert werden muss. Allerdings wird so den Mobilfunkgeräten eine gute Verbindung angezeigt, obwohl evtl. gar keine Verbindung besteht.

US2009/0141 685 und US2006/0264212 offenbaren für einzelne Mobilfunkgeräte eine virtuelle Basisstation zu schaffen, die der Bewegung des Mobilfunkgeräts folgt. Dies erlaubt es dem Mobilfunkgerät ohne jegliche Verbindungsübergaben zu kommunizieren. Die Wechsel der festen Basisstationen finden im Netz statt. Allerdings sind die Detektion der Bewegung, die Vorhersage der wahrscheinlichen nächsten festen Basisstation, in deren Bereich sich das Mobilfunkgerät bewegt, und die Verbindungsübergabe der virtuellen Basisstation aufwendig für das Kommunikationssystem. Bei einer Vielzahl von Mobilfunkgeräten in einem Zug, wäre die Verwaltung von einer entsprechenden Vielzahl von virtuellen Basisstationen ein hoher administrativer Aufwand. Insbesondere muss bei jedem Wechsel des Aussendeorts der virtuellen Basisstation der Datenstrom zu der festen Basisstation angepasst werden.

US2013086665 offenbart eine virtuelle Basisstation, die von einer festen Basisstation oder mehreren festen Basisstationen ausgesandt wird.

US2011/055875 offenbart ein WiMAX Netzwerk, deren Basisstationen über ein passives optisches Netzwerk mit einer Zentrale verbunden sind.

US2009/042563 offenbart ein Mobilfunknetzwerk, in dem Femtozellen, d.h. kleine Basisstationen für Mobilfunknetzwerke die zum Beispiel in Gebäuden angeordnet sind, über ein passives optisches Netzwerk verbunden sind.

### Darstellung der Erfindung

In Anbetracht des Stands der Technik ist es eine Aufgabe der Erfindung, eine Lösung zu finden, die den Aufwand von sich in grossen Gruppen gemeinsam bewegenden Mobilgeräten und des Kommunikationssystems für die Verbindungsübergaben gering zu halten.

Dieses Ziel ist durch ein Verfahren für ein zelluläres Kommunikationssystem mit festen Basisstationen nach dem unabhängigen Anspruch 1 gelöst. Eine virtuelle Basisstation ist dabei einer der festen Basisstationen zugeordnet, wobei diese der virtuellen Basisstation zugeordnete feste Basisstation die Signale der virtuellen Basisstation aussendet. Dabei werden die Daten der virtuellen Basisstation sowohl an die zugeordnete feste Basisstation als auch an weitere feste Basisstationen von einem Netzknoten über eine Multicastverbindung übertragen.

Dieses Ziel ist weiterhin durch ein Kommunikationssystem nach dem unabhängigen Anspruch 12 gelöst. Das Kommunikationssystem weist auf: Feste Basisstationen zur drahtlosen Kommunikation mit Mobilgeräten, wobei die festen Basisstationen ausgebildet sind, Signale einer zugeordneten virtuellen Basisstation auszusenden. Einen Netzknoten, der ausgebildet ist, Daten der virtuellen Basisstation an die der virtuellen Basisstation zugeordnete feste Basisstation und an weitere feste Basisstationen über eine Multicastverbindung zu senden.

Durch die Verwendung von virtuellen Basisstationen in Kombination mit einer Multicastverbindung zwischen den festen Basisstationen und dem Netzknoten, kann die Zuordnung der virtuellen Basisstation sehr leicht zwischen den festen Basisstationen gewechselt werden, ohne dass es dafür notwendig wäre den Datenstrom für die virtuelle Basisstation zu ändern, da jede feste Basisstation der Multicastverbindung die Daten der virtuellen Basisstation jederzeit erhält. Bei einer Änderung der Zuordnung muss nur das Aussenden in der neu zugeordneten Basisstation initiiert werden. Eine Umleitung des Datenstroms ist nicht notwendig.

Weitere vorteilhafte Ausführungsformen sind in den Unteransprüchen angegeben.

Erfindungsgemäß werden die Daten der virtuellen Basisstation von dem Netzknoten über eine Multicastverbindung an die zugeordnete feste Basisstation und an eine weitere feste Basisstation übertragen, so dass die zweite feste Basisstation bei einem Wechsel der Zuordnung der virtuellen Basisstation zu der zweiten festen Basisstation ohne Umleitung des Datenstroms für die virtuelle Basisstation das Signal der virtuellen Basisstation mit den Daten der virtuellen Basisstation aussenden kann.

In einem Ausführungsbeispiel werden bei einem Wechsel der Zuordnung der virtuellen Basisstation von der momentan zugeordneten festen Basisstation auf die weitere feste Basisstation die an der weiteren festen Basisstation über die Multicastverbindung empfangenen Daten der virtuellen Basisstation von der weiteren Basisstation ausgesendet.

In einem Ausführungsbeispiel wird das Aussenden der Signale der virtuellen Basisstation von der zuvor zugeordneten festen Basisstation bei dem Wechsel der Zuordnung gestoppt.

In einem Ausführungsbeispiel wird die weitere feste Basisstation, die die virtuelle Basisstation nach dem Wechsel aussendet, auf der Basis der Bewegung einer Gruppe von mit der virtuellen Basisstation verbundenen Mobilgeräten ausgewählt. Dies hat den Vorteil, dass die virtuelle Basisstation grossen Gruppen von Mobilgeräten folgt, die ein gleiches Bewegungsmuster haben, ohne bei jedem Wechsel der Basisstation, die Daten für die Mobilgeräte dieser Gruppe an eine neue feste Basisstation senden zu müssen.

In einem Ausführungsbeispiel wird die zweite feste Basisstation, die die virtuelle Basisstation nach dem Wechsel aussendet, auf der Basis der Bewegung eines Beförderungsmittels ausgewählt. Dies hat den Vorteil, dass die virtuelle Basisstation Beförderungsmitteln folgt ohne bei jedem Wechsel der Basisstation, die Daten für die mit der virtuellen Basisstation verbundenen Mobilgeräte an eine neue feste Basisstation senden zu müssen.

In einem Ausführungsbeispiel wird die weitere feste Basisstation bei dem Wechsel der Zuordnung informiert, die Daten der virtuellen Basisstation, die über die Multicastverbindung gesendet werden, auszusenden. Dies hat den Vorteil, dass durch den blossen Befehl die empfangenen Daten auszusenden eine Zuordnung realisiert werden kann.

In einem Ausführungsbeispiel wird die momentan zugeordnete feste Basisstation bei dem Wechsel der Zuordnung informiert, das Aussenden der Daten der virtuellen Basisstation, die über die Multicastverbindung gesendet werden, zu unterbrechen. Dies hat den Vorteil, dass durch den blossen Befehl die empfangenen Daten nicht mehr auszusenden eine Beendigung einer Zuordnung realisiert werden kann.

In einem Ausführungsbeispiel werden die Daten der virtuellen Basisstation über die Multicastverbindung an weitere feste Basisstationen übertragen, so dass jede der weiteren festen Basisstationen bei einer Zuordnung zu der virtuellen Basisstation Signale der virtuellen Basisstation aussenden kann. Somit kann die virtuelle Basisstation zwischen einer grossen Anzahl von festen Basisstationen umgeleitet werden, ohne den Datenstrom für die virtuelle Basisstation zwischen dem Netzknoten und den festen Basisstationen zu verändern.

In einem Ausführungsbeispiel ist eine weitere virtuelle Basisstation der weiteren festen Basisstation zugeordnet, die Daten der weiteren virtuellen Basisstation über die Multicastverbindung an die der virtuellen Basisstation zugeordnete feste Basisstation und an die weitere feste Basisstation übertragen werden und die weitere feste Basisstation die Signale der weiteren virtuellen Basisstation aussendet. Durch die Verwendung der Multicastverbindung für eine Gruppe von festen Basisstation haben alle von dieser Gruppe ausgesendeten virtuellen Basisstationen eine durch die Multicastverbindung bestimmte Übertragungskapazität, so dass ein plötzlicher Datenverlust durch Datenengpässe vermieden wird, wenn mehrere virtuelle Basisstationen von einer festen Basisstation gleichzeitig ausgesendet werden.

In einem Ausführungsbeispiel werden die Daten der virtuellen Basisstation von der ersten festen Basisstation und die Daten der weiteren virtuellen Basisstation von der zweiten festen Basisstation an den Netzknoten mit einem Multiplexverfahren über die Multicastverbindung übertragen werden.

In einem Ausführungsbeispiel werden die Daten der virtuellen Basisstation an die erste feste Basisstation und die Daten der weiteren virtuellen Basisstation an die zweite feste Basisstation von dem Netzknoten mit einem Multiplexverfahren über die Multicastverbindung übertragen.

In einem Ausführungsbeispiel sind die Daten der virtuellen Basisstation von dem Netzknoten in der Multicastverbindung an die virtuelle Basisstation adressiert. Dies hat den Vorteil, dass die Daten der virtuellen Basisstation aus den Daten für die der virtuellen Basisstation zugeordnete feste Basisstation nicht erst herausgefiltert werden müssen. Die Daten werden in der Multicastverbindung direkt an die virtuelle Basisstation adressiert, so dass die zugeordnete feste Basisstation nur die an die virtuelle Basisstation adressierten Datenpakete aussenden. Es ist keine Änderung des Datenstroms in der Multicastverbindung notwendig.

In einem Ausführungsbeispiel ist die Multicastverbindung ein passives optisches Netzwerk.

Erfindungsgemäß ist das zelluläre Kommunikationssystem ein Mobilfunknetz und die festen Basisstationen sind Basisstationen eines Mobilfunknetzes. Für Mobilfunknetze, d.h. Netze die erlauben über Mobiltelefone zu kommunizieren, ist jede feste Basisstation mit einer Punkt-zu-Punkt-Verbindung mit dem Netzknoten verbunden. Diese erhöht aber den administrativen Aufwand erheblich, um virtuelle Basisstationen zwischen den festen Basisstationen zu verschieben. Insbesondere ist gerade die Kommunikation von Mobilfunkgeräten in Zügen problematisch.

In einem Ausführungsbeispiel grenzt der Sendebereich der der virtuellen Basisstation zugeordneten festen Basisstation an den Sendebereich der weiteren festen Basisstation an. Es ist besonders vorteilhaft, wenn die Gruppe von festen Basisstationen, die mit einer gleichen Multicastverbindung mit dem Netzknoten verbunden sind, benachbarte Sendebereiche haben. So kann die virtuelle Basisstation von einer festen Basisstation an die benachbarte feste Basisstation ohne eine Änderung des Datenstroms in der Multicastverbindung erfolgen. Insbesondere ist es vorteilhaft, wenn die Gruppe von festen Basisstationen einen Sendebereich entlang eines Wegs eines Beförderungsmittels liegt, z.B. entlang einer Zugstrecke.

In einem Ausführungsbeispiel weist die Multicastverbindung einen ersten Verbindungszweig mit einer der festen Basisstationen auf, wobei der erste Verbindungszweig sich über einen zweiten Verbindungszweig zu einer zweiten der festen Basisstationen verzweigt, wobei der zweite Verbindungszweig sich zu einer dritten der festen Basisstationen verzweigt.

In einem Ausführungsbeispiel ist die der virtuellen Basisstation zugeordnete feste Basisstation ausgebildet, gleichzeitig zu der Aussendung der Signale der virtuellen Basisstation Signale zu der festen Basisstation zugeordnete Signale auszusenden.

In einem Ausführungsbeispiel ist die der virtuellen Basisstation zugeordnete feste Basisstation ausgebildet, nur Signale virtueller Basisstationen auszusenden. Dies hat den Vorteil, dass ein Netzwerk für sich bewegende Mobilgeräte aufgebaut werden kann, das ausreichend Kapazität hat, gleichzeitig von einer festen Basisstation ausgestrahlte virtuelle Basisstationen zu bedienen, ohne die Kapazität durch die Signale einer festen Basisstation einzuschränken.

### Kurze Beschreibung der Figuren

Die Erfindung wird anhand der beigefügten Figuren näher erläutert, wobei zeigen
- **Fig. 1**: eine Ansicht eines Ausführungsbeispiels eines Kommunikationssystems;
- **Fig. 2**: die Vorrichtungen eines Ausführungsbeispiels einer Steuervorrichtung eines Kommunikationssystems;
- **Fig. 3**: die Vorrichtungen eines alternativen Ausführungsbeispiels einer Steuervorrichtung des Kommunikationssystems; und
- **Fig. 4**: eine schematische Darstellung beispielhafter Verfahrensschritte des Kommunikationssystems.

### Wege zur Ausführung der Erfindung

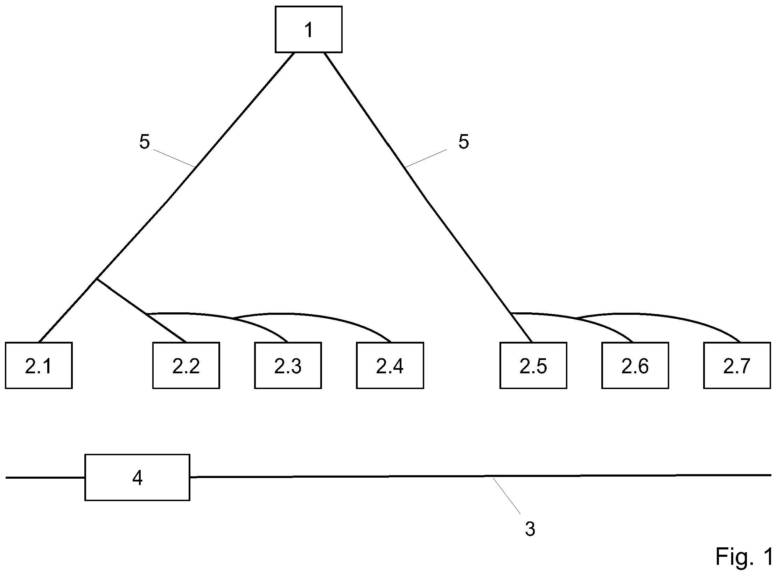

Fig. 1 zeigt ein Ausführungsbeispiel eines Kommunikationssystems. Das Kommunikationssystem weist eine Vielzahl an festen Basisstationen 2 auf, die über mindestens eine Verbindung 5 mit einem oder mehreren Netzknoten 1 des Kommunikationssystems verbunden sind.

Das Kommunikationssystem ist zum Beispiel ein Mobilfunknetz oder Mobiltelefonnetz, wie GSM, GPRS, UMTS, LTE oder ein anderer Mobilfunkstandard zur mobilen Kommunikation.

Die festen Basisstationen 2 sind die Zugangspunkte (access points), die Mobilgeräte des Kommunikationssystems über eine drahtlose Verbindung mit dem Netzknoten 1 und/oder umgekehrt verbinden. Jede feste Basisstation 2 deckt in Abhängigkeit der Sendecharakteristika der festen Basisstation 2 und der örtlichen Gegebenheiten ein bestimmtes Sendegebiet ab.

Die Vielzahl an festen Basisstationen 2 ist örtlich so angeordnet, dass die festen Basisstationen 2 mit ihren Sendegebieten zusammen ein bestimmtes Sendegebiet abdecken. Dies kann zum Beispiel das in Fig. 1 gezeigte Gleis 3 einer bestimmten Zugstrecke oder ein Gleisnetz für den Zugverkehr in einem bestimmten Gebiet sein. Die Erfindung ist natürlich genauso entlang von Autobahnen, Flüssen und anderen Verkehrswegen und von anderen Beförderungsmitteln (wie z.B. Kraftfahrzeug, Schiff, etc.) anwendbar. Auch kann das Kommunikationssystem weitere feste Basisstationen 2, die nicht in der Nähe des Gleises 3 liegen, aufweisen.

Eine feste Basisstation des Stands der Technik sendet jeweils ein der festen Basisstation zugehöriges Signal aus. Auf der Basis dieses der festen Basisstation zugehörigen Signals, kann ein Mobilgerät diese feste Basisstation des Kommunikationssystems identifizieren und von anderen Basisstationen unterscheiden. Auf der Basis verschiedener Signale verschiedener Basisstationen entscheidet das Mobilgerät, mit welcher Basisstation es sich verbindet. Nach der gegenwärtigen Erfindung sind die festen Basisstationen 2 ausgebildet, ein zu einer oder mehreren virtuellen Basisstation gehörendes Signal auszusenden. Dabei sind die Signale der virtuellen Basisstation so ausgebildet, dass sie einem in der virtuellen Basisstation eingewählten Mobilgerät immer von der gleichen Basisstation, nämlich der virtuellen Basisstation, kommend erscheinen, egal von welcher festen Basisstation 2 diese Signale der virtuellen Basisstation gesendet werden. In Fig. 1 ist die feste Basisstation 2.2 in der Nähe eines Zuges 4 und die feste Basisstation 2.2 sendet Signale einer virtuellen Basisstation aus.

In einem Ausführungsbeispiel ist die Vielzahl der festen Basisstationen 2 ausgebildet, sowohl der entsprechenden festen Basisstation 2 zugehörige Signale als auch Signale mindestens einer virtuellen Basisstation auszusenden. In einem anderen Ausführungsbeispiel ist die Vielzahl der festen Basisstationen 2 ausgebildet, nur Signale mindestens einer virtuellen Basisstation auszusenden ohne der entsprechenden Basisstation zugehörige Signale auszusenden. In einem weiteren Ausführungsbeispiel weist die Vielzahl an festen Basisstationen 2 erste feste Basisstationen 2 auf, die sowohl eigene Signale als auch Signale mindestens einer virtuellen Basisstation aussenden und als auch zweite feste Basisstationen 2 auf, die nur Signale mindestens einer virtuellen Basisstation aussenden. In allen Ausführungsbeispielen ist es möglich, dass eine feste Basisstation 2 zusätzlich Signale von zumindest einer weiteren virtuellen Basisstation aussendet.

Im Stand der Technik werden feste Basisstationen normalerweise durch eine optische Punkt-zu-Punkt Verbindung mit einem Netzknoten verbunden. In dem Ausführungsbeispiel in Fig. 1 wird ein Multicastnetz für die Verbindung von mehreren festen Basisstationen 2 mit dem Netzknoten 1 verwendet. Beispielsweise ist dies ein passives optisches Netzwerk (PON), das über die Verbindung 5, die gleichen Informationen zu den festen Basisstationen 2.1, 2.2, 2.3 und 2.4 und die gleichen Informationen zu den festen Basisstationen 2.5, 2.6 und 2.7 bringt. Ohne Beschränkung der Erfindung sind hier in dem ersten Zweig vier feste Basisstationen 2 und in dem zweiten Zweig drei feste Basisstationen 2 angeordnet. Jede andere Anzahl von festen Basisstationen 2 in einem Zweig und jede andere Anzahl von Zweigen ist möglich. Dies hat den Vorteil, dass das Kommunikationssystem keinen Verwaltungsaufwand betreiben muss, um zu überwachen, welche feste Basisstation 2 nun gerade die virtuelle Basisstation beherbergt, um die richtigen Informationen zu den ausgewählten festen Basisstationen 2 zu senden. Die Informationen für die virtuelle Basisstation werden an mehrere Basisstationen 2 gleichzeitig gesendet (Multicast), so dass die ausgewählte feste Basisstation 2 nur informiert werden muss, falls es die Signale der virtuellen Basisstation aussenden muss. Die Datenpakete einer virtuellen Basisstation werden direkt an die virtuelle Basisstation adressiert, so dass die ausgewählte Basisstation nur die Identifizierungsinformationen der virtuellen Basisstation benötigt, um sich die auszusendenden Information der virtuellen Basisstation aus dem Multicastnetzwerk zu holen. Somit werden alle Informationen über alle in den festen Basisstationen 2.1 bis 2.4 aktiven virtuellen Basisstationen an all diese festen Basisstationen 2.1 bis 2.4 gesendet. Somit ist ein Wechsel der virtuellen Basisstation zwischen den festen Basisstationen 2 mit einem sehr geringen Verwaltungsaufwand für das Kommunikationssystem möglich. Das Multicastnetz könnte auch zusätzlich zu einer Punkt-zu-Punkt Verbindung zu dem Netzknoten 1 bestehen. Somit könnten Informationen für ein der festen Basisstation 2 zugehöriges Signal über die Punkt-zu-Punkt Verbindung an die feste Basisstation 2 gesendet werden, während die Informationen für die virtuellen Basisstationen über das Multicastnetz 5 an die festen Basisstationen 2 gesendet wird.

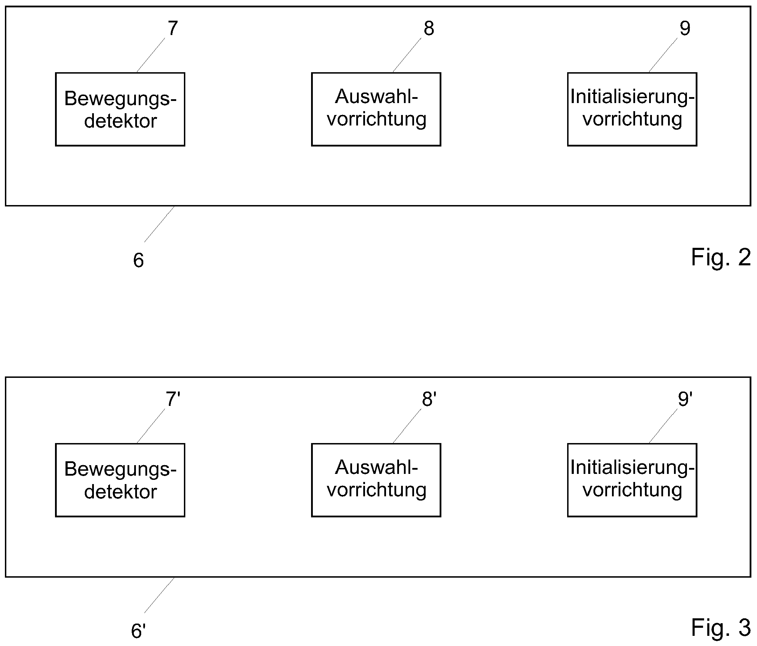

Fig. 2 zeigt ein Ausführungsbeispiel einer Steuervorrichtung 6 des Kommunikationssystems. Die Steuervorrichtung 6 weist einen Bewegungsdetektor 7, eine Auswahlvorrichtung 8 und eine Initialisierungsvorrichtung 9 auf. Die Steuervorrichtung 6 und/oder deren Untervorrichtungen kann/können sowohl zentral in dem Kommunikationssystem, als auch dezentral in den festen Basisstationen 2, als auch dazwischen in den Netzknoten 1, als auch verteilt über eine zentrale Stelle, die Netzknoten 1 und die festen Basisstationen 2 angeordnet sein.

Der Bewegungsdetektor 7 ist ausgebildet, den Ort und/oder die Bewegung eines Mobilgeräts zu detektieren. Dies kann durch die kontinuierliche Bestimmung des Orts über die Zeit des Mobilgeräts geschehen. Der Ort eines Mobilgeräts kann z.B. durch Triangulation von zwischen verschiedenen Basisstationen ausgesendeten Signalen bestimmt werden. Der Ort kann aber auch gröber aufgelöst durch die verwendete feste Basisstation 2 bestimmt werden, z.B. feste Basisstation 2 in Abhängigkeit von der Zeit des Anmeldens oder Abmeldens in dieser festen Basisstation 2 bzw., wenn das Mobilgerät mit einer virtuellen Basisstation verbunden ist, die die virtuelle Basisstation aussendende feste Basisstation 2 in Abhängigkeit von der Zeit.

Die Auswahlvorrichtung 8 ist ausgebildet, auf der Basis des Orts und/oder der Bewegung der Gruppe von Mobilgeräten, die mit einer virtuellen Basisstation verbunden sind, die feste Basisstation 2 auszuwählen, in deren Sendebereich die Gruppe von Mobilfunkgeräten eindringt oder eindringen wird. Dazu erhält die Auswahlvorrichtung 8 von dem Bewegungsdetektor 7 den Ort und/oder die Bewegung der Mobilgeräte, die in einer virtuellen Basisstation eingewählt sind. Alternativ genügt es auch den Ort und/oder die Bewegung von einer repräsentativen Untergruppe der Mobilgeräte, die in einer virtuellen Basisstation eingewählt sind, zu erhalten. Aus der Bewegung der Mobilgeräte der Gruppe bzw. der Untergruppe der eingewählten Mobilgeräte kann die Bewegung der ganzen Gruppe/Untergruppe, z.B. durch Mittelung, Medianbestimmung oder andere Funktionen der Einzelbewegungen, bestimmt werden. In einem Ausführungsbeispiel wird diese Auswahl gemacht, sobald sich die Gruppe von Mobilgeräten in einem Übergangsbereich zwischen einer ersten festen Basisstation 2, die noch die Signale der virtuellen Basisstation aussendet, und zumindest einer zweiten festen Basisstation 2, in deren Sendebereich die Gruppe von Mobilgeräten eindringt, befindet. In einem Ausführungsbeispiel wird diese Auswahl bereits vor dem Erreichen des Übergangsbereichs und/oder vor dem Wechsel der virtuellen Basisstation gemacht. Dies hat den Vorteil, dass die ausgewählte feste Basisstation 2 bereits vor dem Basisstationswechsel der virtuellen Basisstation informiert werden kann, und ein reibungsloser Wechsel der virtuellen Basisstation zwischen zwei festen Basisstationen 2 vorbereitet werden kann, z.B. das Aufwecken der festen Basisstation 2 aus dem Ruhezustand. Sollten an dem Ort des Wechsels oder des vorhergesagten Wechsels der festen Basisstation 2, die die virtuelle Basisstation aussendet, mehr als eine feste Basisstation 2 mit einem guten Signal in Frage kommen, so kann die Auswahl dabei auch eine Schätzung der zukünftigen Route der Gruppe von Mobilgeräten berücksichtigen, um die nächste feste Basisstation 2 zur Aussendung der Signale der virtuellen Basisstation zu bestimmen. Die zukünftige Route kann in einem Ausführungsbeispiel auf der Basis der bisherigen Route geschätzt werden. In einem anderen Ausführungsbeispiel kann die zukünftige Route auf der Basis der zuvorigen Route in Kombination mit Daten von anderen Gruppen von Mobilfunkgeräten, die die gleiche oder eine ähnliche zuvorige Route gewählt haben, geschätzt werden. In einem anderen Ausführungsbeispiel kann die zukünftige Route auf der Basis der zuvorigen Route in Kombination mit Daten von Verkehrswegen geschätzt werden. In einem weiteren Ausführungsbeispiel kann die zukünftige Route auf der Basis eines detektierten Beförderungsmittels mit bekannter zukünftiger Route geschätzt werden. Das Beförderungsmittel kann zum Beispiel auf der Basis des Orts der Gruppe identifiziert werden, wobei der Ort der Gruppe mit Orten von bekannten Beförderungsmitteln abgeglichen wird, um das Beförderungsmittel zu detektieren. Mit dem Wissen der zukünftigen Route kann bei der Auswahl der nächsten festen Basisstation 2 für die Aussendung der Signale der virtuellen Basisstation, z.B. mit Hilfe eines Plans der festen Basisstationen, berücksichtigt werden, welche feste Basisstation 2 auch für den zukünftigen Weg die beste Verbindungsqualität und/oder eine möglichst lange Verbindung mit der festen Basisstation 2 erlaubt. Bei der Auswahl können auch andere Parameter der festen Basisstationen 2, wie z.B. die Auslastung, berücksichtigt werden. Vielleicht wäre eine Basisstation aufgrund ihrer Lage optimal für die Verbindung, kann aber aufgrund der hohen Auslastung keine sichere Verbindung garantieren. So kann eine alternative feste Basisstation 2 ausgewählt werden, die auch mit der nächstschlechteren Lage aufgrund der niedrigeren Auslastung am Ende doch eine bessere Verbindungsqualität bieten kann.

Die Initialisierungsvorrichtung 9 ist ausgebildet, den Zeitpunkt und/oder die feste Basisstation 2 für die Erzeugung einer virtuellen Basisstation zu bestimmen. Das Kommunikationssystem entscheidet über die Erzeugung einer virtuellen Basisstation. Die virtuelle Basisstation wird nicht auf Anfrage eines Mobilgeräts erzeugt. Beispiele für die Initialisierungsvorrichtung 9 werden später beschrieben. Eine virtuelle Basisstation wird erzeugt, wenn die Initialisierungsvorrichtung 9 entscheidet, dass eine virtuelle Basisstation erzeugt wird (siehe unten). Dazu übergibt die Initialisierungsvorrichtung die feste Basisstation 2 und evtl. den Zeitpunkt für die Erzeugung der virtuellen Basisstation.

Die Steuervorrichtung 6 ist ausgebildet, virtuelle Basisstationen zu erzeugen, zu löschen, zu verwalten und den festen Basisstationen 2 Anweisungen für das Aussenden der virtuellen Basisstationen zu senden.

Die Verwaltung umfasst dabei z.B. die Zuordnung der mit der virtuellen Basisstation verbundenen Mobilgeräte und die Zuordnung der virtuellen Basisstation mit einer oder mehreren festen Basisstationen 2, von der die virtuelle Basisstation ausgesendet wird. Dies könnte zum Beispiel dadurch realisiert werden, dass in den Besucherortsregistern (Visitor Location Register; VLR) der mobilen Schaltzentren (Mobile-services Switching Centre; MSC) die virtuellen Basisstationen, die von den mit dem mobilen Schaltzentrum verbundenen festen Basisstationen 2 ausgesendet werden, mit aufgenommen werden. Der Netzknoten 1 könnte zum Beispiel ein solches MSC sein. Somit müsste nur noch eine Zuordnung einer jeden virtuellen Basisstation mit einer (oder mehreren) festen Basisstation 2, die die entsprechende virtuelle Basisstation aussendet, gespeichert werden. Die Mobilgeräte wählen sich dabei selbstständig in einer von einer festen Basisstation 2 ausgesendeten virtuellen Basisstation ein, wenn dessen Signal am stärksten ist oder sonstige Entscheidungskriterien (des Standards) für die virtuelle Basisstation sprechen. Das Kommunikationssystem überwacht in der Steuervorrichtung 6 die aktuell verbundenen Mobilgeräte einer jeden virtuellen Basisstation. Die Verwaltung einer virtuellen Basisstation beinhaltet auch die virtuelle Basisstation einer neuen festen Basisstation 2 zuzuordnen, wenn die Auswahlvorrichtung 8 einen Wechsel der festen Basisstation 2 entscheidet.

Anderseits löscht die Steuervorrichtung 6 bei Erfüllen bestimmter Bedingungen eine virtuelle Basisstation nach deren ordnungsgemässem Herunterfahren. Das Herunterfahren geschieht zum Beispiel durch ein kontinuierliches Abschwächen des Signals, so dass die in der virtuellen Basisstation angemeldeten Mobilgeräte automatisch einen Handover zu einer anderen virtuellen Basisstation oder einer festen Basisstation 2 durchführen, sobald deren Signal stärker ist, als das der herunterfahrenden virtuellen Basisstation. Eine solche Bedingung ist zum Beispiel das Unterschreiten der Anzahl der mit der virtuellen Basisstation verbundenen Mobilgeräte unter eine bestimmte Mindestanzahl von Mobilgeräten. Die Steuervorrichtung 6 kann auch ausgebildet sein, zu erkennen, dass zwei virtuelle Basisstationen Mobilgeräte mit der gleichen Bewegung haben und das Herunterfahren und das Löschen einer der beiden virtuellen Basisstationen veranlassen. Eine andere Bedingung für das Löschen könnte sein, dass sich die virtuelle Basisstation bewegt, da die Verwaltung einer still stehenden virtuellen Basisstation nicht sinnvoll ist.

Die Steuervorrichtung 6 ist weiter ausgebildet, den festen Basisstationen 2 Anweisungen zu senden, das Aussenden von Signalen einer bestimmten virtuellen Basisstation zu beginnen oder das Aussenden der Signale einer bestimmten virtuellen Basisstation zu beenden. Diese Anweisungen werden auf der Basis der Zuordnung der festen Basisstation 2 zu der virtuellen Basisstation in der Steuervorrichtung 6 erzeugt. Die Steuervorrichtung 6 veranlasst somit den Wechsel der virtuellen Basisstation zu der in der Auswahlvorrichtung 8 ausgewählten festen Basisstation 2.

Der Wechsel der virtuellen Basisstation soll am Beispiel des Wechsels der festen Basisstation 2.2, die momentan die Signale der virtuellen Basisstation aussendet, zu einer ausgewählten festen Basisstation 2.3 in Fig. 1 beschrieben werden. Dabei wird gleichzeitig das Aussenden der Signale der virtuellen Basisstation von der festen Basisstation 2.2 unterbrochen, und das Aussenden der Signale der virtuellen Basisstation von der festen Basisstation 2.3 gestartet. Auch ein kurzzeitig gleichzeitiges Aussenden der Signale der virtuellen Basisstation von beiden festen Basisstationen 2.2 und 2.3 ist möglich. Bei einem kurzzeitigen gleichzeitigen Aussenden der Signale der virtuellen Basisstation werden die auszusendenden Signale sowohl an die beiden festen Basisstationen 2.2 und 2.3 vom Netzknoten 1 gesendet als auch die Daten aus dem Uplink doppelt an den beiden festen Basisstation 2.2 und 2.3 empfangen. Somit wechseln alle mit der virtuellen Basisstation verbundenen Mobilgeräte automatisch die feste Basisstation 2 entlang ihres Weges, ohne eine Verbindungsübergabe beantragen zu müssen, d.h. die mit der virtuellen Basisstation verbundenen Mobilgeräte, die sich mit der virtuellen Basisstation mitbewegen bleiben mit der gleichen virtuellen Basisstation verbunden, während sie entlang der Bewegung mit verschiedenen festen Basisstationen 2 kommunizieren. Auch kann so im Netz eventuell vorhergesagt werden, dass eine Verbindungsqualität von einer festen Basisstation 2 zwar kurzfristig schlechter als die einer anderen festen Basisstation 2 ist, aber wegen darauffolgender guter Verbindungsqualität ein Wechsel der festen Basisstation 2 nicht sinnvoll ist. Solche vorrausschauenden Planungen der Verbindungsübergabe kann in dem Mobilgerät nach dem aktuellen Mobilfunkstandard nicht realisiert werden. Gleichzeitig erfordert die Erfindung keine Änderung des Mobilfunkstandards, da das Mobilgerät die virtuelle Basisstation nicht von einer festen Basisstation 2 unterscheiden kann.

In einem Ausführungsbeispiel fragt die Initialisierungsvorrichtung 9 den Ort und/oder die Bewegung von Mobilgeräten in einem bestimmten räumlichen Bereich von dem Bewegungsdetektor 7 an. Aus den Orten und/oder Bewegungen der Mobilgeräte ermittelt die Initialisierungsvorrichtung 9 eine Gruppe von Mobilgeräten, die ein ähnliches Bewegungsmuster haben. Das Feststellen einer solchen Gruppe von Mobilgeräten könnte durch die gleiche Bewegungsrichtung von Mobilgeräten, die sich in einem bestimmten Abstand voneinander aufhalten realisiert werden. Allerdings ist eine solche Detektion aufwendig. Alternativ könnte eine Gruppe von Mobilgeräten mit einem gemeinsamen Bewegungsmuster dadurch detektiert werden, dass sich diese Mobilgeräte bei nacheinander folgenden festen Basisstationen 2 ungefähr gleichzeitig bei der jeweiligen festen Basisstation 2 anmelden.

In einem weiteren Ausführungsbeispiel der Initialisierungsvorrichtung 9 werden bestimmten festen Basisstationen 2 zufällig zur Erzeugung einer virtuellen Basisstation ausgewählt. Wenn die von der Initialisierungsvorrichtung 9 ausgewählte feste Basisstation 2 eine neu erzeugte virtuelle Basisstation aussendet und ein Zug den Sendebereich dieser festen Basisstation 2 passiert, melden sich einige der Mobilgeräte in der neuen virtuellen Basisstation an. Somit bewegt sich die Gruppe der Mobilgeräte, die in der virtuellen Basisstation angemeldet ist, sich mit dem Zug mit. Durch die Bewegung der in der virtuellen Basisstation angemeldeten Mobilgeräte wird dann in der Auswahlvorrichtung 8 eine nächste feste Basisstation 2 ausgewählt, die entlang der Bewegung des Zuges liegt. Somit bewegt sich die neue erzeugte virtuelle Basisstation automatisch mit einem Zug mit, der an der für die Erzeugung ausgewählten festen Basisstation 2 vorbeifährt. Nach und nach wählen auch die restlichen Mobilgeräte in dem Zug diese virtuelle Basisstation als bevorzugte Basisstation aus, da diese kontinuierlich ein gutes Signal bietet. Sollte die Anzahl der in der virtuellen Basisstation eingeloggten Mobilgeräte nach einer bestimmten Zeitspanne nicht eine Mindestanzahl an Mobilgeräten erreichen, wird diese virtuelle Basisstation von der Steuervorrichtung 6 wieder gelöscht. So können ohne einen grossen Detektionsaufwand selbstorganisierend virtuelle Basisstationen erzeugt werden, wobei nur die virtuellen Basisstationen am Leben bleiben, die genügend Mobilgeräte aufweisen. Anstatt die feste Basisstation 2 und/oder den Zeitpunkt der Erzeugung der virtuelle Basisstation in der Initialisierungsvorrichtung 9 zufällig auszuwählen, könnte die Auswahl auch zeitlich und/oder örtlich auf der Basis des Fahrplans des Beförderungsmittels und/oder auf der Basis einer Detektion des Beförderungsmittels geschehen. Das Beförderungsmittel könnte durch eine Schnittstelle mit dem Beförderungsmittelbetreiber lokalisiert werden oder direkt auf der Basis der Signale des Beförderungsmittels detektiert werden. Der Zug kann zum Beispiel durch dessen Signale im Zugmobilfunk, z.B. dem Global System for Mobile Communications - Railway (GSM-R), detektiert werden. Dies erlaubt gezielt an Orten, wo das Beförderungsmittel passieren wird, eine virtuelle Basisstation zu erzeugen.

Auch könnte die Initialisierungsvorrichtung 10 gezielt in bestimmten Situationen eine Erzeugung einer virtuellen Basisstation veranlassen. So kann z.B. detektiert werden, dass die Gruppe der Mobilgeräte, die mit einer virtuellen Basisstation verbunden sind, Untergruppen hat, die sich in verschiedene Hauptrichtungen bewegen bzw. eine erste Untergruppe hat, die sich in eine Hauptrichtung bewegt, und eine zweite Untergruppe hat, die stillsteht. Dies kann zum Beispiel an grossen Umsteigepunkten des Zugnetzes geschehen. So kann die virtuelle Basisstation einer Untergruppe, die sich in eine Hauptrichtung bewegt, folgen, während an dem Ort der zweiten Untergruppe, die stillsteht, oder an dem Ort, wo sich die zweite Untergruppe hinbewegt, eine Erzeugung einer neuen virtuellen Basisstation veranlasst werden.

Die Ausführungsbeispiele zur Erzeugung von virtuellen Basisstationen können auch kombiniert werden.

In dem zuvor beschriebenen Ausführungsbeispiel wurde die Auswahl der nächsten festen Basisstation auf der Basis der Bewegung der in der virtuellen Basisstation eingewählten Mobilgeräte entschieden, so dass die virtuelle Basisstation den sich in einem Beförderungsmittel befindlichen Mobilgeräten automatisch folgt. Alternativ ist es auch möglich, die Auswahl der nächsten festen Basisstation direkt auf der Basis des Orts und/oder der Bewegung des Beförderungsmittels zu bestimmen. In diesem Ausführungsbeispiel ist die virtuelle Basisstation direkt einem bestimmten Beförderungsmittel zugeordnet. Fig. 3 zeigt ein Steuervorrichtung 6' eines solchen alternativen Ausführungsbeispiels. Die Steuervorrichtung 6' weist einen Bewegungsdetektor 7', eine Auswahlvorrichtung 8' und eine Initialisierungsvorrichtung 9' auf. Sofern nicht anders beschrieben entsprechen die Funktionen der Steuervorrichtung 6', des Bewegungsdetektors 7', der Auswahlvorrichtung 8' und der Initialisierungsvorrichtung 9' den entsprechenden Vorrichtungen der Steuervorrichtung 6.

Der Bewegungsdetektor 7' ist ausgebildet, den Ort und / oder die Bewegung eines Beförderungsmittels zu detektieren. Das Beförderungsmittel könnte durch eine Schnittstelle mit dem Beförderungsmittelbetreiber lokalisiert werden oder direkt auf der Basis von Signalen des Beförderungsmittels detektiert werden. Ein Zug als Beförderungsmittel kann zum Beispiel durch dessen Signale im Zugmobilfunk, z.B. dem Global System for Mobile Communications - Railway (GSM-R), detektiert werden.

Die Auswahlvorrichtung 8' ist ausgebildet, auf der Basis des Orts und/oder der Bewegung eines Beförderungsmittels die nächste feste Basisstation 2 auszuwählen, in deren Sendebereich das Beförderungsmittel eindringt oder eindringen wird. Dazu erhält die Auswahlvorrichtung 8' von dem Bewegungsdetektor 7' den Ort und/oder die Bewegung eines Beförderungsmittels. Bei der Auswahl könnte die zukünftige Route des Beförderungsmittels berücksichtigt werden. Die zukünftige Route kann bei einer möglichen Identifikation des Beförderungsmittels auf der Basis des Beförderungsmittelfahrplans bestimmt werden. Alternativ kann die zukünftige Route direkt von Signalen des Beförderungsmittels empfangen werden.

Die Initialisierungsvorrichtung 9' ist ausgebildet, den Zeitpunkt und/oder die feste Basisstation 2 für die Erzeugung einer neuen virtuellen Basisstation zu bestimmen. Der Zeitpunkt und die feste Basisstation 2, bei der die virtuelle Basisstation zum ersten Mal ausgesendet werden soll, kann zum Beispiel auf der Basis des Startpunkts oder eines sonstigen Ortes eines Beförderungsmittels gewählt werden. Der Startpunkt oder der sonstige Ort könnte nach dem Fahrplan eines Beförderungsmittels gewählt werden oder nach Informationen des Beförderungsmittelbetreibers. Auch könnten an bestimmten Punkten des Beförderungsmittelnetzes Beförderungsmittel durch den Bewegungsdetektor detektiert werden und eine feste Basisstation 2 zur Aussendung der neuen virtuellen Basisstation an dem Ort des Beförderungsmittels ausgewählt werden.

Steuervorrichtung 6' funktioniert grösstenteils wie die Steuervorrichtung 6. Alternativ zu der Steuervorrichtung 6 könnte in der Steuervorrichtung 6' die virtuelle Basisstation gelöscht werden, wenn das Beförderungsmittel sein Ziel erreicht hat.

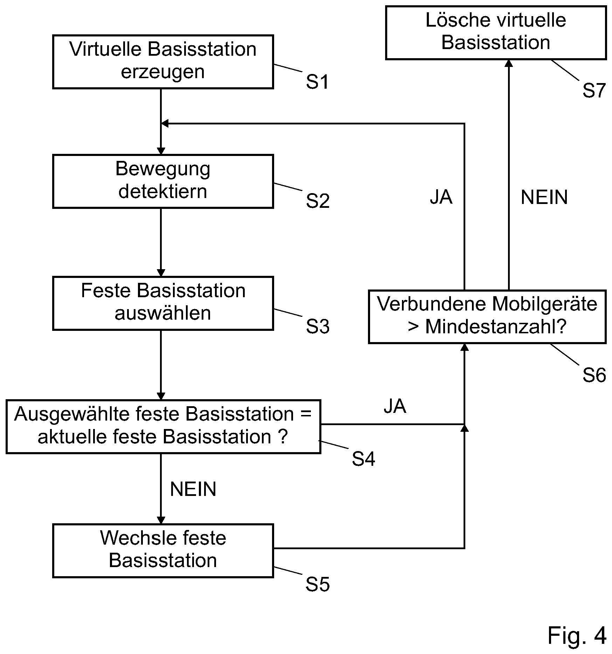

Fig. 4 zeigt exemplarische Verfahrensschritte des Kommunikationssystems zur Steuerung der virtuellen Basisstationen. In Schritt S1 wird wie zuvor beschrieben eine virtuelle Basisstation erzeugt. Dies beinhaltet je nach Ausführungsbeispiel z.B. die Festlegung einer festen Basisstation 2 zur Aussendung der virtuellen Basisstation auf der Basis der Detektion einer Gruppe von sich gemeinsam bewegenden Mobilgeräten, auf der Basis der Detektion von einem Beförderungsmittel, auf der Basis des Fahrplans eines Beförderungsmittels und/oder auf der Basis des Zufalls. Die Signale der virtuellen Basisstation werden von der bestimmten festen Basisstation 2 ausgesendet. In Schritt S2 wird die Bewegung und/oder der Ort je nach Ausführungsbeispiel einer Gruppe der in der virtuellen Basisstation eingewählten Mobilgeräte oder eines Beförderungsmittels bestimmt. In Schritt S3 wird eine feste Basisstation 2 auf der Basis der bestimmten Bewegung oder des bestimmten Orts ausgewählt, wie in Zusammenhang mit der Auswahlvorrichtung 8 oder 8' beschrieben. In Schritt S4 wird überprüft, ob diese ausgewählte feste Basisstation 2 die gleiche feste Basisstation 2 ist, die momentan die Signale der virtuellen Basisstation aussendet. Ist dies nicht dieselbe feste Basisstation 2, so wird in Schritt S5 die feste Basisstation 2 für das Aussenden der virtuellen Basisstation gewechselt. Dazu wird das Aussenden der Signale der virtuellen Basisstation von der momentan aussendenden festen Basisstation 2 unterbrochen und das Aussenden der Signale der virtuellen Basisstation der ausgewählten festen Basisstation 2 begonnen. Dies ist dank der Multicastverbindung 5 der beiden festen Basisstationen 2 durch den einfachen Befehl an die neu ausgewählte feste Basisstation 2, die Datenpakete der virtuellen Basisstation auszusenden, möglich. Eine Veränderung des Datenstroms in dem Netzknoten ist solange nicht notwendig, solange ein Wechsel der festen Basisstation 2 innerhalb des gleichen Multicastnetzwerks stattfindet. Danach wird mit Schritt S6 weiterverfahren. Wird in Schritt S4 festgestellt, dass die ausgewählte feste Basisstation 2 die momentan aussendende feste Basisstation 2 ist, so wird direkt zu Schritt S6 gegangen. In Schritt S6 wird überprüft, ob eine bestimmte Mindestanzahl von Mobilgeräten in der virtuellen Basisstation angemeldet ist. Ist dies über eine bestimmte Zeitdauer nicht der Fall, so wird die virtuelle Basisstation heruntergefahren und gelöscht und die Aussendung ihrer Signale gestoppt. Sind genügend Mobilgeräte in der virtuellen Basisstation eingeloggt oder ist die Mindestzeitspanne noch nicht überschritten, so wird mit Schritt S2 weiterverfahren.

Die Erfindung ist nicht auf die hier beschriebenen Ausführungsbeispiele beschränkt, sondern bezieht sich auf alle unter die Ansprüche fallenden Ausführungsbeispiele. Auch wenn die Erfindung oft im Zusammenhang mit Zügen erläutert wurde, ist die Erfindung auf alle Arten von Beförderungsmitteln anwendbar.

## Patentansprüche

1. Verfahren für ein zelluläres Kommunikationssystem mit festen Basisstationen (2), die mit einem Netzknoten (1) verbunden sind und ausgebildet sind, Signale einer virtuellen Basisstation auszusenden, mit den Schritten:
Zuordnen der virtuellen Basisstation zu einer der festen Basisstationen (2);
Übertragen von Daten der virtuellen Basisstation zwischen einem Netzknoten (1) und der zugeordneten festen Basisstation (2.2), und
Aussenden der Signale der virtuellen Basisstation von der zugeordneten festen Basisstation (2.2) mit den übertragenen Daten der virtuellen Basisstation;
Wechseln der Zuordnung der virtuellen Basisstation von der zugeordneten festen Basisstation (2.2) zu einer weiteren festen Basisstation (2.3) der festen Basisstationen (2);
**dadurch gekennzeichnet, dass**
die Daten der virtuellen Basisstation von dem Netzknoten (1) über eine Multicastverbindung (5) oder eine Broadcastverbindung an die zugeordnete feste Basisstation (2.2) und an die weitere feste Basisstation (2.3) der festen Basisstationen (2) übertragen werden, so dass die weitere feste Basisstation (2.3) bei dem Wechsel der Zuordnung der virtuellen Basisstation mit dem gleichen Datenstrom für die virtuelle Basisstation in der Multicastverbindung oder der Broadcastverbindung das Signal der virtuellen Basisstation mit den Daten der virtuellen Basisstation aussenden kann, und
das zelluläre Kommunikationssystem ein Mobilfunknetz ist, und die festen Basisstationen (2) Basisstationen des Mobilfunknetzes sind.

2. Verfahren nach Anspruch 1, wobei bei einem Wechsel der Zuordnung der virtuellen Basisstation von der zugeordneten festen Basisstation (2.2) auf eine der weiteren festen Basisstationen (2) die an der weiteren festen Basisstation (2.3) über die Multicastverbindung (5) oder die Broadcastverbindung empfangene Daten der virtuellen Basisstation von der neu zugeordneten weiteren festen Basisstation (2.3) ausgesendet werden.

3. Verfahren nach Anspruch 1 oder 2, wobei das Aussenden der Signale der virtuellen Basisstation von der zuvor zugeordneten festen Basisstation (2.2) bei dem Wechsel der Zuordnung gestoppt wird.

4. Verfahren nach einem der Ansprüche 1 bis 3, wobei die weitere feste Basisstation (2.3), die die virtuelle Basisstation nach dem Wechsel aussendet, auf der Basis einer Bewegung einer Gruppe von mit der virtuellen Basisstation verbundenen Mobilgeräten ausgewählt wird.

5. Verfahren nach einem der Ansprüche 1 bis 4, wobei die weitere feste Basisstation (2.3), die die virtuelle Basisstation nach dem Wechsel aussendet, auf der Basis einer Bewegung eines Beförderungsmittels ausgewählt wird.

6. Verfahren nach einem der Ansprüche 1 bis 5, wobei die weitere feste Basisstation (2.3) bei dem Wechsel der Zuordnung informiert wird, die Daten der virtuellen Basisstation, die über die Multicastverbindung (5) oder die Broadcastverbindung gesendet werden, auszusenden.

7. Verfahren nach einem der Ansprüche 1 bis 6, wobei die Daten der virtuellen Basisstation über die Multicastverbindung oder die Broadcastverbindung an weitere feste Basisstationen (2) der festen Basisstationen (2) übertragen werden, so dass jede der weiteren festen Basisstationen (2) bei einer Zuordnung zu der virtuellen Basisstation Signale der virtuellen Basisstation aussenden kann.

8. Verfahren nach einem der Ansprüche 1 bis 7, wobei eine weitere virtuelle Basisstation einer weiteren der festen Basisstationen (2) zugeordnet ist, die Daten der weiteren virtuellen Basisstation über die Multicastverbindung (5) oder die Broadcastverbindung an die der virtuellen Basisstation zugeordnete feste Basisstation (2) und an die der weiteren virtuellen Basisstation zugeordneten weiteren festen Basisstation (2) übertragen werden und die weitere feste Basisstation (2) die Signale der weiteren virtuellen Basisstation aussendet.

9. Verfahren nach Anspruch 8, wobei die Daten der virtuellen Basisstation von der dieser zugeordneten festen Basisstation (2) und die Daten der weiteren virtuellen Basisstation von der dieser zugeordneten festen Basisstation (2) an den Netzknoten (1) mit einem Multiplexverfahren über die Multicastverbindung (5) oder die Broadcastverbindung übertragen werden.

10. Verfahren nach einem der Ansprüche 1 bis 9, wobei die Daten der virtuellen Basisstation von dem Netzknoten (1) in der Multicastverbindung oder der Broadcastverbindung an die virtuelle Basisstation adressiert sind.

11. Verfahren nach einem der Ansprüche 1 bis 10, wobei die Multicastverbindung (5) und/oder die Broadcastverbindung ein passives optisches Netzwerk ist.

12. Kommunikationssystem aufweisend
feste Basisstationen (2) zur drahtlosen Kommunikation mit Mobilgeräten, wobei die festen Basisstationen (2) ausgebildet sind, Signale einer virtuellen Basisstation mit Daten der virtuellen Basisstation auszusenden;
einen Netzknoten (1), der mit den festen Basisstationen (2) verbunden ist und ausgebildet ist, die auszusendenden Daten der virtuellen Basisstation an eine der virtuellen Basisstation zugeordnete feste Basisstation (2.2) zu übertragen;
wobei das Kommunikationssystem ausgebildet ist, die Zuordnung der virtuellen Basisstation von der zugeordneten festen Basisstation (2.2) zu einer weiteren festen Basisstation (2.3) der festen Basisstationen (2) zu wechseln; **gekennzeichnet durch**
eine Multicastverbindung (5) oder eine Broadcastverbindung zwischen dem Netzknoten (1) und den festen Basisstationen (2) ausgebildet, die Daten der virtuellen Basisstation an die der virtuellen Basisstation zugeordnete feste Basisstation (2.2) und an die weitere feste Basisstation (2.3) zu übertragen, so dass die weitere feste Basisstation (2.3) bei dem Wechsel der Zuordnung der virtuellen Basisstation mit dem gleichen Datenstrom für die virtuelle Basisstation in der Multicastverbindung oder der Broadcastverbindung das Signal der virtuellen Basisstation mit den Daten der virtuellen Basisstation aussenden kann, und
das zelluläre Kommunikationssystem ein Mobilfunknetz ist, und die festen Basisstationen (2) Basisstationen des Mobilfunknetzes sind.

13. Kommunikationssystem nach Anspruch 12, wobei die Multicastverbindung (5) oder Broadcastverbindung einen ersten Verbindungszweig mit einer der festen Basisstationen (2) aufweist, wobei der erste Verbindungszweig sich über einen zweiten Verbindungszweig zu einer zweiten der festen Basisstationen (2) verzweigt, wobei der zweite Verbindungszweig sich zu einer dritten der festen Basisstationen (2) verzweigt.

## Claims

1. Method for a cellular communication system having fixed base stations (2), which are connected to a network node (1) and are designed to send signals of a virtual base station, having the steps of:
associating the virtual base station to one of the fixed base stations (2);
transmitting data of the virtual base station between a network node (1) and the associated fixed base station (2.2), and
sending the signals of the virtual base station from the associated fixed base station (2.2) with the transmitted data of the virtual base station;
changing the association of the virtual base station from the associated fixed base station (2.2) to a further fixed base station (2.3) of the fixed base stations (2);
**characterized in that**
the data of the virtual base station are transmitted from the network node (1) to the associated fixed base station (2.2) and to the further fixed base station (2.3) of the fixed base stations (2) via a multicast connection (5) or a broadcast connection, so that the further fixed base station (2.3) can send the signal of the virtual base station with the data of the virtual base station using the same data stream for the virtual base station in the multicast connection or the broadcast connection when the association of the virtual base station changes, and
the cellular communication system is a mobile radio network, and the fixed base stations (2) are base stations of the mobile radio network.

2. Method according to Claim 1, wherein when the association of the virtual base station changes from the associated fixed base station (2.2) to one of the further fixed base stations (2), the data of the virtual base station that are received at the further fixed base station (2.3) via the multicast connection (5) or the broadcast connection are sent from the newly associated further fixed base station (2.3).

3. Method according to Claim 1 or 2, wherein sending of the signals of the virtual base station from the previously associated fixed base station (2.2) is stopped when the association changes.

4. Method according to one of Claims 1 to 3, wherein the further fixe base station (2.3), which sends the virtual base station after the change, is selected on the basis of a movement of a group of mobile devices connected to the virtual base station.

5. Method according to one of Claims 1 to 4, wherein the further fixed base station (2.3), which sends the virtual base station after the change, is selected on the basis of a movement of a means of transport.

6. Method according to one of Claims 1 to 5, wherein the further fixed base station (2.3) is told during the change of assignment to send the data of the virtual base station that are transmitted via the multicast connection (5) or the broadcast connection.

7. Method according to one of Claims 1 to 6, wherein the data of the virtual base station are transmitted to further fixed base stations (2) of the fixed base stations (2) via the multicast connection or the bvroadcast connection, so that each of the further fixed base stations (2) can send signals of the virtual base station when assigned to the virtual base station.

8. Method according to one of Claims 1 to 7, wherein a further virtual base station is assigned to a further instance of the fixed base stations (2), the data of the further virtual base station are transmitted to the fixed base station (2) associated with the virtual base station and to the further fixed base station (2) associated with the further virtual base station via the multicast connection (5) or the braoadcast connection, and the further fixed base station (2) sends the signals of the further virtual base station.

9. Method according to Claim 8, wherein the data of the virtual base station are transmitted from the fixed base station (2) associated therewith and the data of the further virtual base station are tranmitted from the fixed base station (2) associated therewith to the network node (1) via the multicast connection (5) or the broadcast connection using a multiplexing method.

10. Method according to one of Claims 1 to 9, wherein the data of the virtual base station are sent from the network node (1) to the virtual base station in the multicast connection or the broadcast connection.

11. Method according to one of Claims 1 to 10, wherein the multicast connection (5) and/or the brodcast connection is a passive optical network.

12. Communication system having
fixed base stations (2) for wireless communication with mobile devices, wherein the fixed base stations (2) are designed to send signals of the virtual base station with data of the virtual base station;
a network node (1) connected to the fixed base stations (2) and designed to transmit the data of the virtual base station that need to be sent to a fixed base station (2.2) associated with the virtual base station;
wherein the communication system is designed to change the assignment of the virtual base station from the associated fixed base station (2.2) to a further fixed base station (2.3) of the fixed base stations (2); **characterized by**
a multicast connection (5) or a broadcast connection between the network node (1) and the fixed base stations (2), designed to transmit the data of the virtual base station to the fixed base station (2.2) associated with the virtual base station and to the further fixed base station (2.3), so that the further fixed base station (2.3) can send the signal of the virtual base station with the data of the virtual base station using the same data stream for the virtual base station in the multicast connection or the broadcast connection when the assignment of the virtual base station changes, and
the cellular communication system is a mobile radio network and the fixed base stations (2) are base stations of the mobile radio network.

13. Communication system according to Claim 12, wherein the multicast connection (5) or broadcast connection has a first connecting path to one of the fixed base stations (2), wherein the first connecting path branches to a second instance of the fixed base stations (2) via a second connecting path, wherein the second connecting path branches to a third instance of the fixed base stations (2).

## Revendications

1. Procédé pour un système de communication cellulaire comprenant des stations de base fixes (2), lesquelles sont connectées à un nœud de réseau (1) et sont configurées pour émettre des signaux d'une station de base virtuelle, comprenant les étapes suivantes :
affectation de la station de base virtuelle à l'une des stations de base fixes (2) ;
transmission de données de la station de base virtuelle entre un nœud de réseau (1) et la station de base fixe (2.2) affectée, et
émission des signaux de la station de base virtuelle depuis la station de base fixe (2.2) affectée avec les données transmises de la station de base virtuelle ;
changement de l'affectation de la station de base virtuelle de la station de base fixe (2.2) affectée à une autre station de base fixe (2.3) parmi les stations de base fixes (2) ;
**caractérisé en ce que**
les données de la station de base virtuelle sont transmises depuis le nœud de réseau (1) à la station de base fixe (2.2) affectée et à l'autre station de base fixe (2.3) parmi les stations de base fixes (2) par le biais d'une liaison de multidiffusion (5) ou d'une liaison de radiodiffusion, de sorte que l'autre station de base fixe (2.3), lors du changement de l'affectation de la station de base virtuelle, peut émettre le signal de la station de base virtuelle avec les données de la station de base virtuelle avec le même flux de données pour la station de base virtuelle dans la liaison de multidiffusion ou dans la liaison de radiodiffusion, et
le système de communication cellulaire est un réseau de radiocommunication mobile et les stations de base fixes (2) sont des stations de base du réseau de radiocommunication mobile.

2. Procédé selon la revendication 1, selon lequel, lors d'un changement de l'affectation de la station de base virtuelle de la station de base fixe (2.2) affectée à l'une des autres stations de base fixes (2), les données de la station de base virtuelle reçues au niveau de l'autre station de base fixe (2.3) par le biais de la liaison de multidiffusion (5) ou de la liaison de radiodiffusion sont émises par l'autre station de base fixe (2.3) nouvellement affectée.

3. Procédé selon la revendication 1 ou 2, selon lequel, l'émission des signaux de la station de base virtuelle depuis la station de base fixe (2.2) précédemment affectée est arrêtée lors du changement de l'affectation.

4. Procédé selon l'une des revendications 1 à 3, selon lequel l'autre station de base fixe (2.3), que la station de base virtuelle transmet après le changement, est sélectionnée sur la base d'un mouvement d'un groupe d'appareils mobiles connectés à la station de base virtuelle.

5. Procédé selon l'une des revendications 1 à 4, selon lequel l'autre station de base fixe (2.3), que la station de base virtuelle transmet après le changement, est sélectionnée sur la base d'un mouvement d'un moyen de transport.

6. Procédé selon l'une des revendications 1 à 5, selon lequel l'autre station de base fixe (2.3) est informée, lors du changement de l'affectation, du fait qu'elle doit transmettre les données de la station de base virtuelle, lesquelles sont transmises par le biais de la liaison de multidiffusion (5) ou de la liaison de radiodiffusion.

7. Procédé selon l'une des revendications 1 à 6, selon lequel les données de la station de base virtuelle sont transmises par le biais de la liaison de multidiffusion ou de la liaison de radiodiffusion à d'autres stations de base fixes (2) parmi les stations de base fixes (2), de sorte que chacune des autres stations de base fixes (2) peut émettre des signaux de la station de base virtuelle lors d'une affectation à la station de base virtuelle.

8. Procédé selon l'une des revendications 1 à7, selon lequel une autre station de base virtuelle est affectée à uen autre des stations de base fixes (2), les données de l'autre station de base virtuelle sont transmises, par le biais de la liaison de multidiffusion (5) ou de la liaison de radiodiffusion, à la station de base fixe (2) affectée à la station de base virtuelle et à l'autre station de base fixe (2) affectée à l'autre station de base virtuelle, et l'autre station de base fixe (2) émet les signaux de l'autre station de base virtuelle.

9. Procédé selon la revendication 8, selon lequel les données de la station de base virtuelle sont transmises par la station de base fixe (2) qui lui est affectée et les données de l'autre station de base virtuelle sont transmises par la station de base fixe (2) qui lui est affectée au nœud de réseau (1) au moyen d'un procédé de multiplexage par le biais de la liaison de multidiffusion (5) ou de la liaison de radiodiffusion.

10. Procédé selon l'une des revendications 1 à 9, selon lequel les données de la station de base virtuelle sont adressées au nœud de réseau (1) dans la liaison de multidiffusion ou la liaison de radiodiffusion au niveau de la station de base virtuelle.

11. Procédé selon l'une des revendications 1 à 10, selon lequel la liaison de multidiffusion (5) et/ou la liaison de radiodiffusion est un réseau optique passif.

12. Système de communication comportant
des stations de base fixes (2) pour la communication sans fil avec des appareils mobiles, selon lequel les stations de base fixes (2) sont configurées pour émettre des signaux d'une station de base virtuelle avec des données de la station de base virtuelle ;
un nœud de réseau (1) qui est connecté aux stations de base fixes (2) et qui est configué pour transmettre les données depuis la station de base virtuelle à une station de base fixe (2.2) affectée à la station de base virtuelle ;
selon lequel le système de communication est configuré pour changer l'affectation de la station de base virtuelle de la station de base fixe (2.2) affectée à une autre station de base fixe (2.3) parmi les stations de base fixes (2) ;
**caractérisé par**
l'établissement d'une liaison de multidiffusion (5) ou une liaison de radiodiffusion entre le nœud de réseau (1) et les stations de base fixes (2) pour transmettre les données depuis la station de base virtuelle à la station de base fixe (2.2) affectée à la station de base virtuelle et à l'autre station de base fixe (2.3), lors du changement de l'affectation de la station de base virtuelle, peut émettre le signal de la station de base virtuelle avec les données de la station de base virtuelle avec le même flux de données pour la station de base virtuelle dans la liaison de multidiffusion ou la liaison de radiodiffusion, et
le sytème de communication cellulaire est un réseau de radiocommunication mobile et les stations de base fixes (2) sont des stations de base du réseau de radiocommunication mobile

13. Système de communication selon la renvendication 12, selon lequel la liaison de multidiffusion (5) ou la liaison de radiodiffusion comprend uen première branche de liaison avec l'une des stations de base fixes (2), selon lequel la première branche de liaison se ramifie par le biais d'une deuxième branche de liaison vers une deuxième des stations de base fixes (2), selon lequel la deuxième branche de liaison se ramifie vers une troisième des stations de base fixes (2).
